(19) Europäisches Patentamt / European Patent Office / Office européen des brevets

(11) **EP 1 331 492 B1**

(12) **FASCICULE DE BREVET EUROPEEN**

(45) Date de publication et mention de la délivrance du brevet:
**13.07.2011 Bulletin 2011/28**

(51) Int Cl.:
***G01S 13/93*** *(2006.01)*

(21) Numéro de dépôt: **03290169.6**

(22) Date de dépôt: **23.01.2003**

(54) **Procédé de détermination du caractère inévitable de la collision entre un véhicule et un obstacle**

Verfahren zur Bestimmung des unvermeidlichen Charakters der Kollision zwischen einem Kraftfahrzeug und einem Hindernis

Method for determining the inevitable character of the collision between a vehicle and an obstacle

(84) Etats contractants désignés:
**AT BE BG CH CY CZ DE DK EE ES FI FR GB GR HU IE IT LI LU MC NL PT SE SI SK TR**

(30) Priorité: **24.01.2002 FR 0200869**

(43) Date de publication de la demande:
**30.07.2003 Bulletin 2003/31**

(73) Titulaire: **Peugeot Citroën Automobiles SA 92200 Neuilly sur Seine (FR)**

(72) Inventeur: **Baraud, Pierre 92190 Meudon (FR)**

(56) Documents cités:
**WO-A1-02/058975     US-A- 5 332 057
US-A- 6 084 508**

• **ANDREWS S ET AL: "A two-dimensional vehicle control strategy for automated obstacle avoidance" INTELLIGENT TRANSPORTATION SYSTEM, 1997. ITSC '97., IEEE CONFERENCE ON BOSTON, MA, USA 9-12 NOV. 1997, NEW YORK, NY, USA, IEEE, US, 9 novembre 1997 (1997-11-09), pages 841-846, XP010270784 ISBN: 0-7803-4269-0**
• **PATENT ABSTRACTS OF JAPAN vol. 018, no. 050 (P-1683), 26 janvier 1994 (1994-01-26) & JP 05 274035 A (MAZDA MOTOR CORP), 22 octobre 1993 (1993-10-22)**
• **PATENT ABSTRACTS OF JAPAN vol. 1997, no. 05, 30 mai 1997 (1997-05-30) & JP 09 011870 A (TOYOTA MOTOR CORP), 14 janvier 1997 (1997-01-14)**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## EP 1 331 492 B1

## Description

La présente invention concerne les véhicules automobiles, et plus spécifiquement les équipements de sécurité pour de tels véhicules. Se pose pour les véhicules le problème de la détection des obstacles; cette détection sert notamment à avertir le conducteur de véhicule ou à déclencher des équipements de sécurité, comme des coussins gonflables, un freinage automatique, un tendeur de ceinture de sécurité.

US-A-5 314 037 décrit un système d'évitement de collision pour véhicule; le véhicule est muni d'un ou plusieurs radars à lasers, qui permettent de détecter la position, la direction du mouvement, la vitesse et la taille d'obstacles. Il est aussi prévu d'utiliser un capteur d'angle de direction ou un gyroscope pour fournir des informations quant aux variations de direction du véhicule équipé du système. Le système calcule un instant de collision estimé, par le rapport entre la distance du véhicule à l'obstacle et la vitesse relative du véhicule à l'obstacle. Cet instant estimé est comparé à un temps minimal admissible, dont le calcul fait intervenir une fonction à variables multiples. La nature de cette fonction n'est pas précisée. En fonction de la nature de la comparaison, différentes alarmes sont mises en oeuvre.

US-A-6 085 151 décrit un système capteur de collision prédictif. Ce document propose des méthodes d'analyse des obstacles et de leur comportement.

Les procédés proposés dans ces documents ont pour objectif de prévoir un comportement futur de l'obstacle par rapport au véhicule, i.e. d'extrapoler dans le temps le comportement relatif de l'obstacle et du véhicule. Ces techniques présentent les inconvénients suivants :

- l'extrapolation des comportements des objets ne sont que des suppositions, et ne prennent pas en compte d'éventuels changements brusques - comme un coup de volant du conducteur qui veut éviter l'obstacle. Des incertitudes sur la conclusion de la scène existent et il est difficile d'être sûr qu'aucun élément perturbateur ne s'introduit dans le déroulement prévu de la scène; l'incertitude est d'autant plus élevée que l'extrapolation porte sur une durée importante;
- elles nécessitent des systèmes de détection très performants, très complets, permettant de détecter la position et le contour de l'objet, la vitesse des objets, l'accélération; ces systèmes sont fiables et donc coûteux.

Il existe donc un besoin d'un système fiable, simple et peu coûteux, qui permette de déterminer le caractère inévitable d'une collision.

En conséquence, l'invention propose, dans un mode de réalisation, un procédé de détermination du caractère inévitable de la collision d'un véhicule et d'un obstacle comprend les étapes de :

- mesure de la vitesse du véhicule ou de la vitesse relative du véhicule par rapport à l'obstacle ;
- calcul par rapport au véhicule d'une zone de collision inévitable à partir de l'accélération maximale possible pour le véhicule et de la vitesse ou de la vitesse relative mesurée;
- l'accélération maximale présentant une valeur fixe suivant la direction de la vitesse du véhicule ;
- mesure de la position de l'obstacle par rapport au véhicule;
- détermination du caractère inévitable de la collision si la position de l'obstacle est incluse dans la zone de collision inévitable,
- la zone de collision inévitable étant l'intersection de la zone balayée par le véhicule dans une trajectoire d'évitement par la gauche avec l'accélération maximale possible et de la zone balayée par le véhicule dans une trajectoire d'évitement par la droite avec l'accélération maximale possible.

Selon encore une variante, l'accélération maximale présente un module fixe suivant la direction normale à la vitesse du véhicule.

L'invention a également pour objet un procédé de déclenchement d'un équipement de sécurité dans un véhicule, comprenant :

- la détermination du caractère inévitable de la collision d'un véhicule et d'un obstacle selon de tels procédés de détermination;
- le déclenchement de l'équipement en cas de détermination que la collision est inévitable.

L'invention concerne encore un programme de détermination du caractère inévitable de la collision d'un véhicule et d'un obstacle, comprenant :

- une routine de réception d'une valeur de la vitesse du véhicule ou de la vitesse relative du véhicule par rapport à l'obstacle et de la position de l'obstacle par rapport au véhicule
- une routine de calcul par rapport au véhicule d'une zone de collision inévitable à partir de l'accélération maximale

2

possible pour le véhicule et de la vitesse ou de la vitesse relative mesurée ;

- l'accélération maximale présentant une valeur fixe suivant la direction de la vitesse du véhicule ; et
- une routine déterminant si la position de l'obstacle est incluse dans la zone de collision inévitable,
- la routine de calcul calculant la zone de collision inévitable comme l'intersection de la zone balayée par le véhicule dans une trajectoire d'évitement par la gauche avec l'accélération maximale possible et de la zone balayée par le véhicule dans une trajectoire d'évitement par la droite avec l'accélération maximale possible.

Selon encore une variante, l'accélération maximale présente un module fixe suivant la direction normale à la vitesse du véhicule.

L'invention a en outre pour objet un système de détermination du caractère inévitable de la collision d'un véhicule et d'un obstacle, comprenant un système de calcul embarqué avec une mémoire contenant un programme tel que décrit précédemment.

D'autres caractéristiques et avantages de l'invention apparaîtront à la lecture de la description qui suit de modes de réalisation de l'invention, donnée à titre d'exemple et en référence aux dessins annexés qui montrent:

- figure 1 une représentation schématique d'un véhicule, et de ses trajectoires d'évitement;
- figure 2 une représentation schématique d'un véhicule, d'un obstacle, et d'une zone de collision inévitable;
- figures 3 à 5, des graphes de la zone de collision inévitable pour différentes configurations du véhicule et de l'obstacle.
- figure 6, un graphe représentant les étapes du procédé de l'invention.

L'invention propose, pour un véhicule, de déterminer le caractère inévitable d'une collision entre un véhicule et un obstacle mobile par rapport au véhicule, en prenant en compte les stratégies d'évitement les plus efficaces que peut mettre en oeuvre le conducteur du véhicule.

A titre d'exemples extrêmes, à 100 km/h, si un poteau est placé devant le pare-choc du véhicule, à 25 cm, il est impossible de l'éviter, quoi que l'on fasse. Inversement, deux véhicules se suivant à 100 km/h, à 5 cm l'un de l'autre, ne vont pas se percuter tant qu'ils resteront à la même vitesse. Le choc n'est alors pas inévitable.

Dans la suite de la description, le procédé est décrit en référence à un véhicule automobile; il est plus généralement susceptible de s'appliquer dès lors qu'une stratégie d'évitement d'un obstacle est possible pour un véhicule, automobile ou autre.

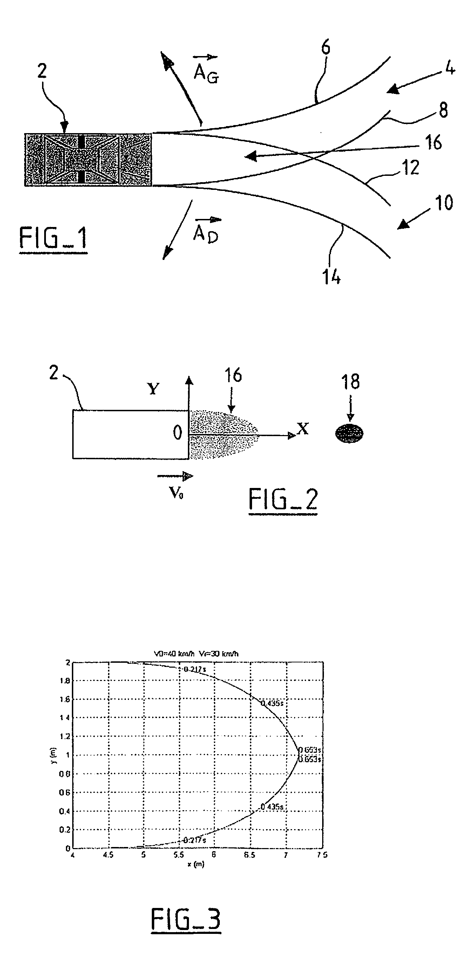

La figure 1 montre une représentation schématique d'un véhicule, et de ses trajectoires d'évitement. On utilise un repère (x, y) cartésien, lié à la Terre, dont la direction x est la direction de mouvement du véhicule, et dont l'origine O est confondue avec le véhicule à l'instant t=0. La figure montre le véhicule 2, que l'on suppose initialement en mouvement, suivant l'axe x. Elle montre aussi une trajectoire 4 d'évitement par la gauche, qui correspond à un braquage à gauche par le conducteur du véhicule, suivant l'accélération maximale possible. Cette trajectoire est matérialisée sur la figure par deux courbes 6, 8, entre lesquelles se trouve l'ensemble des lieux balayés par le véhicule au cours de son mouvement. La figure montre encore le vecteur d'accélération $\vec{A_G}$ correspondant : il présente une composante latérale - suivant la direction y - et une composante longitudinale - suivant la direction x; cette dernière composante est négative, et traduit un freinage concomitant au braquage vers la gauche.

Cette trajectoire d'évitement est donc la trajectoire qui correspond à l'évitement maximal possible pour le véhicule. De même, la figure montre la trajectoire 10 d'évitement de l'obstacle par la droite; comme dans le cas précédent, cette trajectoire est matérialisée par deux courbes 12 et 14, et correspond à l'accélération maximale $\vec{A_D}$ possible pour éviter l'obstacle en passant à sa droite.

Les courbes 8 et 12, matérialisant respectivement la limite droite de la trajectoire d'évitement par la gauche et la limite gauche de la trajectoire d'évitement par la droite définissent une zone 16, sur l'avant du véhicule. Le véhicule balaye nécessairement cette zone 16, quelle que soit la réaction du conducteur du véhicule - évitement par la droite, évitement par la gauche ou absence de réaction. Cette zone est donc qualifiée dans la suite de zone de collision inévitable. Le calcul de la forme de cette zone est détaillé dans la suite de la description.

L'invention propose de prendre en compte cette zone, et de considérer qu'une collision avec un obstacle est inévitable dès lors que la position et la vitesse relatives de l'obstacle par rapport au véhicule sont telles que l'obstacle va pénétrer dans la zone de collision inévitable.

La figure 2 montre une représentation schématique d'un véhicule, d'un obstacle, et d'une zone de collision inévitable; on a porté à la figure de nouveau le véhicule 2, la zone de collision inévitable 16, les axes x et y, ainsi qu'un obstacle 18. L'origine O du repère est sur longitudinalement l'avant du véhicule et transversalement au milieu de celui-ci. La figure montre encore la vitesse initiale $V_0$ du véhicule, suivant l'axe x.

La forme de la zone de collision inévitable peut être calculée, en considérant la vitesse initiale du véhicule, ainsi que l'accélération maximale possible. Dans le repère (x, y) défini plus haut, la vitesse est un vecteur de coordonnées $(v_0, 0)$.

Dans un repère lié au véhicule, l'accélération maximale est un vecteur de coordonnées $(a_f, a_b)$. La valeur négative $a_f$ de l'accélération correspond au freinage maximal du véhicule, tandis que la valeur positive $a_b$ correspond à l'accélération latérale maximale possible pour une stratégie d'évitement; cette valeur $a_b$ est positive pour une stratégie d'évitement par la gauche ou négative pour une stratégie d'évitement par la droite. Ces valeurs des composantes de l'accélération peuvent être considérées comme indépendantes du temps - dans la mesure où l'on considère les valeurs maximales possibles.

On considère un repère $(u_t, u_n)$ lié au véhicule, $u_t$ étant un vecteur unitaire parallèle à la vitesse du véhicule, et $u_n$ un vecteur unitaire défini par le caractère orthonormé direct du repère; $u_n$ est donc perpendiculaire à la vitesse du véhicule. On a alors :

$$\mathbf{u_t} = \frac{1}{v(t)}\begin{bmatrix} +\dot{x}(t) \\ +\dot{y}(t) \end{bmatrix}$$

et

$$\mathbf{u_n} = \frac{1}{v(t)}\begin{bmatrix} -\dot{y}(t) \\ +\dot{x}(t) \end{bmatrix}$$

en notant $v(t)$ le module de la vitesse du véhicule, $\dot{x}(t)$ la dérivée par rapport au temps de l'abscisse $x(t)$ du véhicule et $\dot{y}(t)$ la dérivée par rapport au temps de l'ordonnée $y(t)$ du véhicule.

Le module $v(t)$ de la vitesse du véhicule peut s'écrire, dans le repère terrestre

$$v(t) = \sqrt{\dot{x}(t)^2 + \dot{y}(t)^2}$$

et vaut, compte tenu des définitions des composantes de l'accélération données plus haut

$$v(t) = v_0 + a_f.t$$

En appliquant une formule de changement de repère, l'accélération dans le repère terrestre $(x, y)$ s'écrit donc en fonction des composantes $(a_f, a_b)$ de l'accélération dans le repère $(u_t, u_n)$

$$\begin{bmatrix} \ddot{x}(t) \\ \ddot{y}(t) \end{bmatrix} = \frac{1}{v(t)}\begin{bmatrix} +\dot{x}(t) & -\dot{y}(t) \\ +\dot{y}(t) & +\dot{x}(t) \end{bmatrix}\begin{bmatrix} a_f \\ a_b \end{bmatrix}$$

en notant $\ddot{x}(t)$ la dérivée seconde par rapport au temps de l'abscisse $x(t)$ du véhicule et $\ddot{y}(t)$ la dérivée seconde par rapport au temps de l'ordonnée $y(t)$ du véhicule; ceci donne

$$(v_0 + a_f.t)\begin{bmatrix} \ddot{x}(t) \\ \ddot{y}(t) \end{bmatrix} = \begin{bmatrix} +\dot{x}(t) & -\dot{y}(t) \\ +\dot{y}(t) & +\dot{x}(t) \end{bmatrix}\begin{bmatrix} a_f \\ a_b \end{bmatrix}$$

On obtient ainsi deux équations différentielles couplées; la résolution de ces deux équations, obtenue en posant $z(t) = x(t) + i.y(t)$, avec classiquement $i^2 = -1$, amène à

$$x(t) = \frac{(v_0 + a_f t)^2}{4a_f^2 + a_b^2}\left\{2a_f \cos\left[\frac{a_b}{a_f}\ln\left(1 + \frac{a_f t}{v_0}\right)\right] + a_b \sin\left[\frac{a_b}{a_f}\ln\left(1 + \frac{a_f t}{v_0}\right)\right]\right\} - \frac{2a_f v_0^2}{4a_f^2 + a_b^2} + x_0$$

et

$$y(t) = \frac{(v_0 + a_f t)^2}{4a_f^2 + a_b^2}\left\{2a_f \sin\left[\frac{a_b}{a_f}\ln\left(1 + \frac{a_f t}{v_0}\right)\right] - a_b \cos\left[\frac{a_b}{a_f}\ln\left(1 + \frac{a_f t}{v_0}\right)\right]\right\} + \frac{a_b v_0^2}{4a_f^2 + a_b^2} + y_0$$

Le développement des formules précédentes à un ordre 2 par rapport au temps donne ainsi la définition suivante de la zone de collision inévitable. La courbe 8 est donnée par les équations

$$x(t) = v_0 t + \frac{a_f t^2}{2}$$

et

$$y(t) = y_0 + \frac{a_b t^2}{2}$$

dans le cadran x positif y positif, avec $y_0$ la demi-largeur du véhicule, tandis que la courbe 12 est donnée par les équations

$$x(t) = v_0 t + \frac{a_f t^2}{2}$$

et

$$y(t) = -y_0 + \frac{a_b t^2}{2}$$

dans le cadran x positif, y négatif, avec les mêmes notations. Ces équations correspondent à la définition

-   de la courbe 8 comme le mouvement d'un point de coordonnées initiales (0, $y_0$) animé d'une vitesse initiale ($v_0$, 0) et d'une accélération initiale ($a_f$, -$a_b$), avec $a_b$ positif et
-   de la courbe 12 comme le mouvement d'un point de coordonnées initiales (0, -$y_0$) animé d'une vitesse initiale ($v_0$, 0) et d'une accélération initiale ($a_f$, $a_b$), avec $a_b$ positif.

Cette définition de la zone inévitable est obtenue ci-dessus pour une vitesse $v_0$ du véhicule; et peut être utilisée pour un obstacle fixe. Dans le cas d'un obstacle mobile, la zone de collision inévitable 16 est simplement définie à l'aide des mêmes équations, mais considérant en lieu et place de la vitesse initiale ($v_0$, 0) du véhicule la vitesse relative du véhicule par rapport à l'obstacle suivant l'axe x, ($v_{r0x}$, 0). Dans cette définition de la zone inévitable, on ne tient pas compte d'une éventuelle vitesse relative latérale de l'obstacle par rapport au véhicule, dans la mesure où la stratégie d'évitement n'est pas définie. Ainsi, la stratégie d'évitement pourrait être appropriée - braquage dans une direction opposée à la vitesse relative latérale de l'obstacle; elle pourrait aussi être mauvaise - braquage dans la direction de la vitesse relative latérale de l'obstacle.

On obtient alors la définition suivante de la zone de collision inévitable. La courbe 8 est donnée par les équations

$$x(t) = v_{r0x} t + \frac{a_f t^2}{2}$$

et

$$y(t) = y_0 + \frac{a_b t^2}{2}$$

dans le cadran x positif y positif, avec $y_0$ la demi-largeur du véhicule, tandis que la courbe 12 est donnée par les équations

$$x(t) = v_{r0x} t + \frac{a_f t^2}{2}$$

et

$$y(t) = -y_0 + \frac{a_b t^2}{2}$$

dans le cadran x positif, y négatif

On peut aussi se placer dans l'hypothèse d'une vitesse relative normale non nulle. Dans l'exemple d'une composante normale $v_{r0y}$ de la vitesse relative du véhicule par rapport à l'obstacle, la zone de collision inévitable serait donnée par les équations :

$$x(t) = v_{r0x} t + \frac{a_f t^2}{2} \qquad\qquad y(t) = y_0 + v_{r0y} t + \frac{a_b t^2}{2}$$

dans le cadran x positif y positif, et

$$x(t) = v_{r0x} t + \frac{a_f t^2}{2} \qquad\qquad y(t) = -y_0 + v_{r0y} t + \frac{a_b t^2}{2}$$

dans le cadran x positif, y négatif. Par rapport à l'exemple précédent, la zone de collision inévitable est décalée vers la gauche (les valeurs de y positives) pour une composante normale $v_{r0y}$ positive de la vitesse relative du véhicule par rapport à l'obstacle; ceci correspond qualitativement au fait qu'une stratégie d'évitement en braquant à gauche est inappropriée, et qu'une stratégie d'évitement en braquant à droite est plus appropriée.

Il est ainsi possible, en fonction de la vitesse initiale du véhicule, ou de la vitesse relative du véhicule par rapport à l'obstacle, de définir complètement une zone de collision inévitable, en tenant compte de l'accélération maximale possible.

Dans l'exemple ci-dessus, l'accélération maximale possible est définie par une valeur maximale possible d'accélération de freinage, et une valeur maximale possible de accélération latérale. Une valeur maximale possible pour ces deux paramètres est de 10 m.s$^{-2}$; cette valeur correspond à une hypothèse favorable, d'une réaction rapide du conducteur, d'un bon état des pneumatiques et d'une bonne adhérence sur la route. Ces valeurs maximales correspondent à une zone de collision inévitable aussi réduite que possible.

On pourrait encore utiliser pour définir la zone de collision inévitable d'autres paramètres tels que l'adhérence à t=0, l'angle volant à t=0, la charge du véhicule ou tous les autres paramètres détectables pour le véhicule. Toutes ces informations complémentaires permettront d'agrandir la zone inévitable, mais ne sont pas indispensables, la zone définie par la vitesse seule appartenant à la zone définie par plusieurs paramètres. Ces informations seront prises en compte par l'influence qu'elles ont sur les accélérations longitudinales et transversales maximales réalisables par le véhicule. L'influence de paramètres tels que l'angle volant sur l'accélération transversale est à calculer en fonction de la vitesse réelle du porteur, et non en fonction de la vitesse relative obstacle-porteur.

Les figures 3 à 5 montrent différents exemples de calcul de la zone inévitable, dans un repère (x, y), gradué en mètres, dont l'origine est décalée par rapport aux indications données ci-dessus, pour se trouver sur le coin avant droit du véhicule. On a aussi porté à la figure, pour certains points de la zone inévitable, l'instant auquel le véhicule atteint ce point. Tous les exemples sont calculés pour des valeurs maximales de 10 m.s$^{-2}$ pour l'accélération longitudinale et transversale.

EP 1 331 492 B1

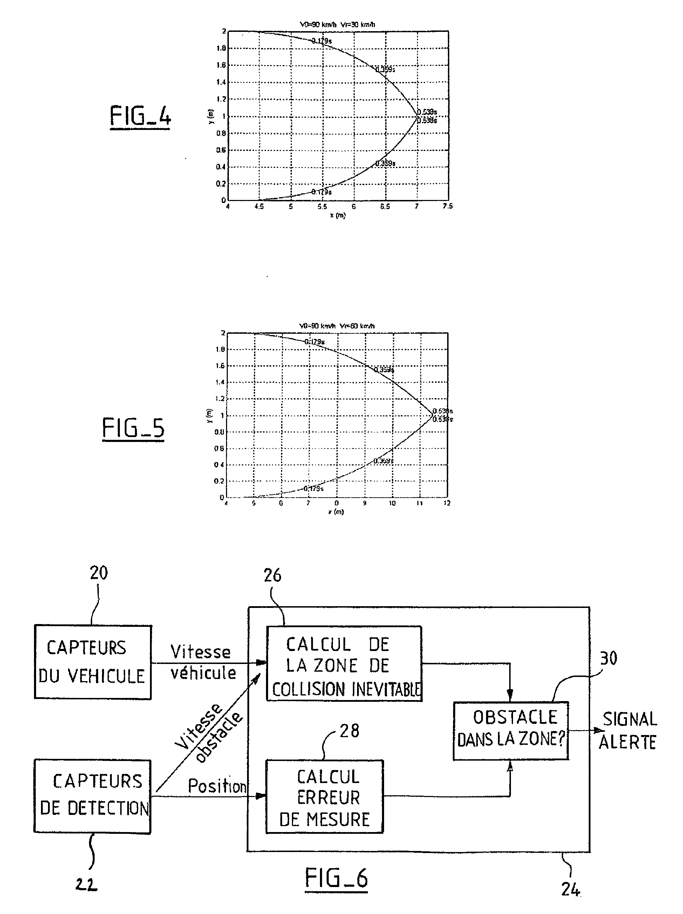

La figure 3 montre un exemple avec une vitesse $v_0$ de 40 km/h, et une vitesse relative de 30 km/h - soit un obstacle mobile à une vitesse de 10 km/h dans la même direction que le véhicule. La figure 4 montre un autre exemple, avec une vitesse $v_0$ de 90 km/h, et une vitesse relative de 30 km/h - soit un obstacle mobile à une vitesse de 60 km/h dans la même direction que le véhicule. La comparaison des figures 3 et 4 montre que la zone inévitable est plus réduite pour une vitesse absolue du véhicule plus importante - mais que les différents points de cette zone sont atteints plus rapidement.

La figure 5 montre un exemple avec une vitesse $v_0$ de 90 km/h, et une vitesse relative de 60 km/h - soit un obstacle mobile à une vitesse de 30 km/h dans la même direction que le véhicule. La comparaison des figures 4 et 5 montre que la zone inévitable est nettement plus étendue pour une vitesse relative plus importante - mais que la zone est balayée dans chaque cas en un temps sensiblement égal.

La description qui précède enseigne donc comment calculer, à partir de la vitesse absolue du véhicule, ou de la vitesse relative du véhicule par rapport à l'obstacle, une zone de collision inévitable. Cette zone peut être calculée à tout instant. On peut aussi ne la mettre à jour qu'en cas de présence d'un obstacle, ou en cas de modification de la vitesse du véhicule.

Il suffit alors pour détecter une collision inévitable, de déterminer si un obstacle se trouve dans la zone en cause.

La figure 6 montre un graphe représentant l'architecture logique d'un système mettant en oeuvre l'invention. Sont représentés en 20 les capteurs du véhicule, qui fournissent des informations relatives à la vitesse du véhicule; le cas échéant, ces capteurs peuvent transmettre d'autres paramètres, comme l'angle volant, l'état des pneumatiques; ces autres paramètres peuvent influer sur le choix des accélérations maximales.

Sont représentés en 22 les capteurs de détection fournissant la position et le cas échéant la vitesse de l'obstacle.

Les informations fournies par les capteurs 20 et par les capteurs 22 sont appliquées à un système de calcul ou calculateur 24 qui est implémenté dans un processeur dédié, par un programme dans un processeur, par un circuit de calcul spécialisé ou autres, avec une mémoire associée. Plus spécifiquement, on a représenté à la figure des éléments logiques mis en oeuvre dans ce calculateur. Le premier élément est un élément 26 de calcul de la zone de collision inévitable; il reçoit les informations provenant des capteurs du véhicule, notamment la vitesse; il reçoit le cas échéant l'information de vitesse de l'obstacle provenant des capteurs 22, dans la mesure où la vitesse de l'obstacle est prise en compte. Le deuxième élément 28 est un élément de prise en compte de l'erreur de mesure; cet élément est facultatif, et met en oeuvre la méthode décrite dans la demande de brevet français déposée le même jour sous le titre "Procédé de traitement probabiliste des points détectés par un système de supervision de l'environnement". Il fournit une information de position de l'obstacle, retraitée pour tenir compte de l'erreur de mesure, et permet une approche probabiliste de l'obstacle.

Le troisième élément est un élément 30 de calcul de présence de l'obstacle dans la zone de collision inévitable; il reçoit la définition de la zone de collision inévitable depuis l'élément 26 et la position depuis l'élément 28 (ou directement depuis l'élément 22) et fournit en sortie un signal d'alerte représentatif de la présence de l'obstacle dans la zone de collision inévitable.

D'un point de vue matériel, l'invention peut être mise en oeuvre à l'aide des capteurs existant sur les véhicules; ces capteurs permettent notamment de connaître la vitesse du véhicule par rapport au sol. On utilise en outre un capteur de détection, qui permet de connaître la position et le cas échéant la vitesse relative d'un obstacle. Ce capteur ci n'a pas besoin d'être très performant puisque la zone à supervisée est limitée, et que l'information requise est limitée :

- position des obstacles;
- vitesse relative des obstacles détectés à l'avant du véhicule.

Par exemple, le capteur pourra être celui défini pour une fonction ACC ("automatic cruise control", contrôle automatique de croisière) ou "Collision Warning" (avertisseur de collision). Ce capteur peut donc être utilisé pour plusieurs fonctions, ne nécessitant ainsi aucun surcoût.

S'ajoutent à ces capteurs connus en soi un système de calcul de la zone de collision inévitable, apte à calculer la zone et à déterminer si un obstacle est présent dans cette zone. Le système de calcul est, comme décrit plus haut, implémenté à l'aide d'un processeur dédié ou d'un autre moyen de calcul. Il met en oeuvre un programme de détermination du caractère inévitable, qui est stocké dans la mémoire associée; ce programme présente une routine de réception d'une valeur de la vitesse du véhicule ou de la vitesse relative du véhicule par rapport à l'obstacle et de la position de l'obstacle par rapport au véhicule, une routine de calcul par rapport au véhicule d'une zone de collision inévitable à partir de l'accélération maximale possible pour le véhicule et de la vitesse ou de la vitesse relative mesurée; et une routine déterminant si la position de l'obstacle est incluse dans la zone de collision inévitable. On entend ici par routine un ensemble d'instructions apte à commander le fonctionnement d'un processeur pour réaliser une fonction.

La fréquence de traitement de l'information pourra être fixée par la fréquence de délivrances des différents capteurs, et est de préférence supérieure à 40Hz, pour une réactivité suffisante du système.

L'invention s'applique notamment à la commande d'équipements de sécurité. Ainsi, si un obstacle est détecté dans la zone de collision inévitable, il est possible de générer une alerte vers les équipements de sécurité qui peuvent être activés. Sinon, le système se met en attente d'une nouvelle acquisition du ou des capteurs. Les systèmes de protection activés ne sont pas détaillés ici; on peut mentionner à titre d'exemple uniquement les coussins gonflables. L'alerte émise pourra être utilisée seule pour le déclenchement de systèmes de protection, ou venir en confirmation d'un système de détection de collision utilisant une autre méthodologie présentant des incertitudes sur l'aspect inévitable du crash. Eventuellement, il pourra être demandé au système de valider l'alerte plusieurs fois avant de la transmettre au véhicule.

Bien entendu, la présente invention n'est pas limitée aux exemples et modes de réalisation décrits et représentés, mais elle est susceptible de nombreuses variantes accessibles à l'homme de l'art. On peut notamment modifier les valeurs proposées des accélérations maximales. L'ordre des différentes étapes du procédé est indifférent; ainsi, s'il est nécessaire de connaître la vitesse du véhicule ou la vitesse relative du véhicule pour calculer la zone de collision inévitable, on peut mesurer la position de l'obstacle en même temps que sa vitesse, mesurer la position de l'obstacle en même temps que l'on effectue le calcul de la zone de collision inévitable, ou encore mesurer cette position après le calcul de la zone de collision inévitable.

**Revendications**

1. Un procédé de détermination du caractère inévitable de la collision d'un véhicule (2) et d'un obstacle (18), comprenant les étapes de :

   - mesure (20) de la vitesse du véhicule ou de la vitesse relative du véhicule par rapport à l'obstacle;
   - calcul par rapport au véhicule d'une zone (16) de collision inévitable à partir de l'accélération maximale possible pour le véhicule et de la vitesse ou de la vitesse relative mesurée, l'accélération maximale présentant une valeur fixe suivant la direction de la vitesse du véhicule ;
   - mesure (22) de la position de l'obstacle par rapport au véhicule;
   - détermination du caractère inévitable de la collision si la position de l'obstacle est incluse dans la zone de collision inévitable,
   - la zone de collision inévitable étant l'intersection de la zone balayée par le véhicule dans une trajectoire d'évitement par la gauche avec l'accélération maximale possible et de la zone balayée par le véhicule dans une trajectoire d'évitement par la droite avec l'accélération maximale possible.

2. Le procédé de la revendication 1, **caractérisé en ce que** l'accélération maximale présente un module fixe suivant la direction normale à la vitesse du véhicule.

3. Un procédé de déclenchement d'un équipement de sécurité dans un véhicule, comprenant :

   - la détermination du caractère inévitable de la collision d'un véhicule (2) et d'un obstacle (18) selon le procédé de l'une des revendications 1 à 2;
   - le déclenchement de l'équipement en cas de détermination que la collision est inévitable.

4. Un programme de détermination du caractère inévitable de la collision d'un véhicule (2) et d'un obstacle (18), comprenant :

   - une routine de réception d'une valeur de la vitesse du véhicule ou de la vitesse relative du véhicule par rapport à l'obstacle et de la position de l'obstacle par rapport au véhicule
   - une routine de calcul par rapport au véhicule d'une zone (16) de collision inévitable à partir de l'accélération maximale possible pour le véhicule et de la vitesse ou de la vitesse relative mesurée; l'accélération maximale présentant une valeur fixe suivant la direction de la vitesse du véhicule et
   - une routine déterminant si la position de l'obstacle est incluse dans la zone de collision inévitable
   - la routine de calcul calculant la zone de collision inévitable comme l'intersection de la zone balayée par le véhicule dans une trajectoire d'évitement par la gauche avec l'accélération maximale possible et de la zone balayée par le véhicule dans une trajectoire d'évitement par la droite avec l'accélération maximale possible.

5. Le programme de la revendication 4, **caractérisé en ce que** l'accélération maximale présente un module fixe suivant la direction normale à la vitesse du véhicule.

6. Un système de détermination du caractère inévitable de la collision d'un véhicule (2) et d'un obstacle (18), comprenant un système de calcul embarqué (24) avec une mémoire contenant un programme selon l'une des revendications 4 à 5.

**Claims**

1. A method for determining the inevitable character of the collision of a vehicle (2) and of an obstacle (18), comprising the stages of:

   - measurement (20) of the speed of the vehicle or of the relative speed of the vehicle with respect to the obstacle;
   - calculation with respect to the vehicle of an inevitable collision zone (16) from the maximum possible acceleration for the vehicle and the speed or the relative measured speed, with the maximum acceleration presenting a fixed value according to the direction of the speed of the vehicle;
   - measurement (22) of the position of the obstacle with respect to the vehicle;
   - determination of the inevitable character of the collision if the position of the obstacle is included in the inevitable collision zone,
   - the inevitable collision zone being the intersection of the zone swept by the vehicle in an avoidance trajectory to the left with the maximum possible acceleration and of the zone swept by the vehicle in an avoidance trajectory to the right with the maximum possible acceleration.

2. The method of Claim 1, **characterized in that** the maximum acceleration presents a fixed module according to the normal direction to the speed of the vehicle.

3. A method for initiating safety equipment in a vehicle, comprising:

   - determination of the inevitable character of the collision of a vehicle (2) and of an obstacle (18) according to the method of one of Claims 1 to 2;
   - initiation of the equipment in the case of determination that the collision is inevitable.

4. A programme for determination of the inevitable character of the collision of a vehicle (2) and of an obstacle (18), comprising:

   - a routine for reception of a value of the speed of the vehicle or of the relative speed of the vehicle with respect to the obstacle and of the position of the obstacle with respect to the vehicle
   - a routine for calculation with respect to the vehicle of an inevitable collision zone (16) from the maximum possible acceleration for the vehicle and of the speed or of the measured relative speed; the maximum acceleration presenting a fixed value according to the direction of the speed of the vehicle and
   - a routine determining whether the position of the obstacle is included in the inevitable collision zone
   - the calculation routine calculating the inevitable collision zone as the intersection of the zone swept by the vehicle in an avoidance trajectory to the left with the maximum possible acceleration and of the zone swept by the vehicle in an avoidance trajectory to the right with the maximum possible acceleration.

5. The programme of Claim 4, **characterized in that** the maximum acceleration presents a fixed module according to the normal direction to the speed of the vehicle.

6. A system for determination of the inevitable character of the collision of a vehicle (2) and of an obstacle (18), comprising an on-board calculation system (24) with a memory containing a programme according to one of Claims 4 to 5.

**Patentansprüche**

1. Verfahren zum Bestimmen der Unvermeidbarkeit des Zusammenstoßes eines Fahrzeugs (2) und eines Hindernisses (18), mit den folgenden Schritten:

   - Messung (20) der Geschwindigkeit des Fahrzeugs oder der relativen Geschwindigkeit des Fahrzeugs im Vergleich zu dem Hindernis;
   - Berechnung in Bezug auf das Fahrzeug eines Bereichs (16) des unvermeidbaren Zusammenstoßes ausgehend von der maximal möglichen Beschleunigung für das Fahrzeug und der gemessenen Geschwindigkeit oder gemessenen relativen Geschwindigkeit, wobei die maximale Beschleunigung einen fixen Wert entlang der Richtung der Geschwindigkeit des Fahrzeugs aufweist;
- Messung (22) der Position des Hindernisses in Bezug zu dem Fahrzeug;
- Bestimmen der Unvermeidbarkeit des Zusammenstoßes, wenn die Position des Hindernisses in dem Bereich des unvermeidbaren Zusammenstoßes enthalten ist,
- wobei der Bereich des unvermeidbaren Zusammenstoßes die Schnittstelle des Bereichs, den das Fahrzeug auf einer Ausweichbahn nach links mit maximal möglicher Beschleunigung überstreicht, und des Bereichs ist, den das Fahrzeug auf einer Ausweichbahn nach rechts mit der maximal möglichen Beschleunigung überstreicht.

2. Verfahren nach Anspruch 1, **dadurch gekennzeichnet, dass** die maximale Beschleunigung ein fixes Modul entlang der zu der Geschwindigkeit des Fahrzeugs normal liegenden Richtung aufweist.

3. Verfahren zum Auslösen einer Sicherheitsausrüstung in einem Fahrzeug, Folgendes aufweisend:

    - Bestimmen der Unvermeidbarkeit des Zusammenstoßes eines Fahrzeugs (2) und eines Hindernisses (18) gemäß dem Verfahren eines der Ansprüche 1 bis 2;
    - Auslösen der Ausrüstung in dem Fall des Bestimmens, dass das Zusammenstoßen unvermeidlich ist.

4. Programm zum Bestimmen der Unvermeidbarkeit des Zusammenstoßes eines Fahrzeugs (2) und eines Hindernisses (18), Folgendes aufweisend:

    - ein Hilfsprogramm zum Empfangen eines Werts der Geschwindigkeit des Fahrzeugs oder der relativen Geschwindigkeit des Fahrzeugs in Bezug zu dem Hindernis und der Position des Hindernisses in Bezug zu dem Fahrzeug,
    - ein Hilfsprogramm zum Berechnen eines Bereichs (16) des unvermeidbaren Zusammenstoßes in Bezug zu dem Fahrzeug ausgehend von der maximal möglichen Beschleunigung für das Fahrzeug und der gemessenen Geschwindigkeit oder der gemessenen relativen Geschwindigkeit; wobei die maximale Beschleunigung einen fixen Wert entlang der Richtung der Geschwindigkeit des Fahrzeugs aufweist, und
    - ein Hilfsprogramm, das bestimmt, ob die Position des Hindernisses in dem Bereich des unvermeidbaren Zusammenstoßes enthalten ist,
    - wobei das Rechenhilfsprogramm den Bereich des unvermeidbaren Zusammenstoßes als die Schnittstelle des Bereichs, den das Fahrzeug auf einer Ausweichbahn nach links mit der maximal möglichen Beschleunigung überstreicht, und des Bereichs, den das Fahrzeug auf einer Ausweichbahn nach rechts mit der maximal möglichen Beschleunigung überstreicht, berechnet.

5. Programm nach Anspruch 4, **dadurch gekennzeichnet, dass** die maximale Beschleunigung ein fixes Modul entlang der Richtung im rechten Winkel zu der Geschwindigkeit des Fahrzeugs aufweist.

6. System zum Bestimmen der Unvermeidbarkeit des Zusammenstoßes eines Fahrzeugs (2) und eines Hindernisses (18), das ein mitgeführtes Rechensystem (24) mit einem Speicher aufweist, der ein Programm nach einem der Ansprüche 4 bis 5 enthält.

FIG_1

FIG_2

FIG_3

FIG_4

FIG_5

FIG_6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5314037 A

- US 6085151 A